(19) Europäisches Patentamt
European Patent Office
Office européen des brevets

(11) **EP 4 782 690 A1**

(12) **EUROPEAN PATENT APPLICATION**
published in accordance with Art. 153(4) EPC

(43) Date of publication:
**29.07.2026 Bulletin 2026/31**

(51) International Patent Classification (IPC):
*F04B 39/02* (2006.01)

(21) Application number: **25828492.6**

(52) Cooperative Patent Classification (CPC):
**F04B 39/02; F04C 29/02; F16C 17/02; F16C 33/10; F25B 1/00**

(22) Date of filing: **29.09.2025**

(86) International application number:
**PCT/JP2025/034352**

(87) International publication number:
**WO 2026/075055 (09.04.2026 Gazette 2026/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.10.2024 JP 2024175408**

(72) Inventors:
• **MAEJIMA, Yukiko**
  **Osaka-shi, Osaka 530-0001 (JP)**
• **IWAIDA, Yumemi**
  **Osaka-shi, Osaka 530-0001 (JP)**
• **SHIMOZONO, Naoki**
  **Osaka-shi, Osaka 530-0001 (JP)**
• **TSUTSUMI, Satoru**
  **Osaka-shi, Osaka 530-0001 (JP)**
• **WATANABE, Norihito**
  **Inuyama-shi, Aichi 484-0061 (JP)**

(71) Applicants:
• **DAIKIN INDUSTRIES, LTD.**
  **Osaka-Shi, Osaka 530-0001 (JP)**
• **Daido Metal Company Ltd.**
  **Nagoya-shi, Aichi 460-0008 (JP)**

(74) Representative: **Hoffmann Eitle**
  **Patent- und Rechtsanwälte PartmbB**
  **Arabellastraße 30**
  **81925 München (DE)**

(54) **REFRIGERANT COMPRESSOR, REFRIGERATION CYCLE DEVICE PROVIDED WITH REFRIGERANT COMPRESSOR, AND METHOD FOR MANUFACTURING REFRIGERANT COMPRESSOR**

(57) To provide a refrigerant compressor capable of suppressing a refrigerating machine oil from remaining at a slide portion while maintaining a low miscibility between an R290 refrigerant and the refrigerating machine oil. The scroll compressor includes a compression mechanism that compresses an R290 refrigerant, a drive shaft that transmits power to the compression mechanism, a slide bearing (200) that axially supports the drive bearing, a casing that houses the compression mechanism, the drive bearing, and the slide bearing, and a refrigerating machine oil stored in the casing. The refrigerating machine oil is PAG, POE, or PVE having an OH group at a terminal of a chemical structure. The slide bearing has a composite material CM including a resin-impregnated layer (220) in which a porous metal M is impregnated with a resin P including PTFE. A slide surface (222) of the slide bearing is formed of a resin-impregnated layer, and the metal is exposed at a predetermined metal exposure rate. A surface energy on a surface of the resin-impregnated layer of the composite material at the predetermined metal exposure rate is less than 40 mN/m.

FIG. 3B

**Description**

Technical Field

The present disclosure relates to a refrigerant compressor, a refrigeration cycle apparatus including the refrigerant compressor, and a method for manufacturing the refrigerant compressor.

Background Art

From the viewpoint of suppression of global warming, for example, as disclosed in PTL 1 (International Publication No. 2017/72867), the application of an R290 refrigerant (propane refrigerant) having a low global warming potential to a refrigeration cycle apparatus is promoted.

The R290 refrigerant has an excellent property of a low global warming potential. The R290 refrigerant is designated as CLASS 3 (higher flammability) in ISO817:2014 (refrigerant-name and safety class), and has a property of being flammable. Therefore, from the viewpoint of safety, it is preferable that the amount of R290 refrigerant charged into the refrigeration cycle apparatus is as small as possible.

The refrigerant compressor of the refrigeration cycle apparatus is filled with a refrigerating machine oil together with the refrigerant in order to lubricate a slide portion. In general, a hydrocarbon-based refrigerant such as the R290 refrigerant has a high miscibility with a refrigerating machine oil. When a large amount of R290 refrigerant is dissolved in the refrigerating machine oil, there is a problem in that it is necessary to increase the amount of refrigerant to be filled in the refrigeration cycle apparatus, contrary to the goal of reducing the amount of R290 refrigerant used.

As a countermeasure against such a problem, a refrigerating machine oil having an OH group at the terminal can be used. This is because the refrigerating base oil having an OH group at the terminal has a high polarity, whereas the R290 refrigerant has a low polarity, so that the miscibility between the R290 refrigerant and the refrigerating machine oil becomes low.

Summary of Invention

Technical Problem

However, when such a refrigerating machine oil having an OH group at the terminal is used, while the advantage of suppressing an increase in the amount of R290 refrigerant used can be obtained, the viscosity of the refrigerating machine oil is less likely to decrease because R290 is less likely to be mixed with the refrigerating machine oil.

Therefore, it is preferable that the refrigerating machine oil supplied to the slide portion of the refrigerant compressor for lubrication is discharged from the slide portion as quickly as possible after lubricating the slide portion, but the refrigerating machine oil tends to remain at the slide portion. Therefore, when the refrigerating machine oil having an OH group at the terminal is used, the temperature of the slide portion and the components provided around the slide portion may rise beyond an appropriate temperature range, and the reliability of the refrigerant compressor may decrease.

Therefore, there is a demand for a refrigerant compressor capable of suppressing the refrigerating machine oil from remaining at the slide portion while maintaining a low miscibility between the R290 refrigerant and the refrigerating machine oil in order to reduce the amount of R290 refrigerant used.

Solution to Problem

A refrigerant compressor according to a first aspect includes a compression mechanism, a drive shaft, a cylindrical slide bearing, a casing, and a refrigerating machine oil. The compression mechanism is configured to compress an R290 refrigerant (propane refrigerant). The drive shaft is configured to transmit power to the compression mechanism. The slide bearing is configured to axially support the drive shaft. The casing houses the compression mechanism, the drive shaft, and the slide bearing. The refrigerating machine oil is stored in the casing. The refrigerating machine oil is PAG (polyalkylene glycol), POE (polyol ester), or PVE (polyvinyl ether) having an OH group at a terminal of a chemical structure. The slide bearing includes a composite material including a resin-impregnated layer in which a porous metal is impregnated with a resin including PTFE. A slide surface of the slide bearing is formed of the resin-impregnated layer, and the metal is exposed at a predetermined metal exposure rate. A surface energy on a surface of the resin-impregnated layer of the composite material at the predetermined metal exposure rate is less than 40 mN/m.

When the surface energy of the slide surface of the slide bearing is high, the refrigerating machine oil is likely to remain at the slide portion between the slide bearing and the drive shaft.

On the other hand, since the refrigerant compressor according to the first aspect uses the slide bearing in which the surface energy of the slide surface is suppressed to be low, the refrigerating machine oil can be quickly discharged from the slide portion between the slide bearing and the drive shaft, and the temperature increase of the components constituting the slide portion between the slide bearing and the drive shaft can be suppressed.

A refrigerant compressor according to a second aspect is the refrigerant compressor according to the first aspect, and the predetermined metal exposure rate is in a range of 5% to 80%.

In the refrigerant compressor according to the second aspect, the metal exposure rate of 5% at lowest is ensured so that the abrasion resistance of the slide bearing is easily ensured. On the other hand, in the refrigerant compressor according to the second aspect, the metal exposure rate is limited to 80% or less so that the surface energy of the slide surface of the slide bearing can be suppressed to less than 40 mN/m.

A refrigerant compressor according to a third aspect is the refrigerant compressor according to the second aspect, and the predetermined metal exposure rate is in a range of 30% to 60%.

In the refrigerant compressor according to the third aspect, it is possible to suppress the surface energy of the slide surface of the slide bearing to a relatively low level by limiting the metal exposure rate to 60% or less, while ensuring a relatively high abrasion resistance of the slide bearing by ensuring a metal exposure rate of 30% or more.

A refrigerant compressor according to a fourth aspect is the refrigerant compressor according to any one of the first aspect to the third aspect, and the surface energy on the surface of the resin-impregnated layer of the composite material at the predetermined metal exposure rate is less than 35 mN/m.

In the refrigerant compressor according to the fourth aspect, since the slide bearing in which the surface energy of the slide surface is suppressed to less than 35 mN/m is used, it is possible to quickly discharge the refrigerating machine oil from the slide portion and to suppress the temperature increase of the components constituting the slide portion.

A refrigerant compressor according to a fifth aspect is the refrigerant compressor according to the fourth aspect, and the surface energy of the surface of the resin-impregnated layer of the composite material at the predetermined metal exposure rate is less than 30 mN/m.

In the refrigerant compressor according to the fifth aspect, in particular, since the slide bearing in which the surface energy of the slide surface is further suppressed to less than 30 mN/m is used, the refrigerating machine oil can be quickly discharged from the slide portion, and the temperature increase of the components constituting the slide portion can be suppressed.

A refrigeration cycle apparatus according to a sixth aspect includes the refrigerant compressor according to any one of the first aspect to the fifth aspect.

The refrigeration cycle apparatus according to the sixth aspect can realize a refrigeration cycle apparatus with high reliability.

A method for manufacturing a refrigerant compressor according to a seventh aspect is a method for manufacturing the refrigerant compressor according to any one of the first aspect to the fifth aspect. The manufacturing method includes a step of processing the composite material to be the slide bearing into a cylindrical shape; and a step of cutting the resin-impregnated layer forming the slide surface of the slide bearing and setting a metal exposure rate of a cut surface to the predetermined metal exposure rate.

In the method for manufacturing the refrigerant compressor according to the seventh aspect, the slide surface of the slide bearing has the predetermined metal exposure rate so that it is possible to realize the slide bearing in which the surface energy of the slide surface is suppressed to less than 40 mN/m, and in the refrigerant compressor, the refrigerating machine oil can be quickly discharged from the slide portion between the slide bearing and the drive shaft, and the temperature increase of the components constituting the slide portion between the slide bearing and the drive shaft can be suppressed.

Brief Description of Drawings

[FIG. 1] FIG. 1 is a schematic configuration diagram of an air conditioner according to an embodiment of a refrigeration cycle apparatus.
[FIG. 2] FIG. 2 is a schematic cross-sectional view of a scroll compressor as an example of a refrigerant compressor used in the air conditioner of FIG. 1.
[FIG. 3A] FIG. 3A is a diagram schematically illustrating a cross-section of a composite material used for a slide bearing of the scroll compressor of FIG. 2 before cutting processing.
[FIG. 3B] FIG. 3B is an enlarged view of a part of a cross-section of the cylindrical slide bearing cut in a direction orthogonal to an axial direction of the cylinder.
[FIG. 4] FIG. 4 is a graph illustrating actually measured values of a surface energy when a metal exposure rate of a surface of a resin-impregnated layer of the composite material is changed.
[FIG. 5] FIG. 5 is a schematic flow chart of a method for manufacturing the scroll compressor (in particular, a portion related to formation of the slide bearing).
[FIG. 6] FIG. 6 is an image view of an SEM image of the surface of the resin-impregnated layer of the composite material after cutting the surface of the resin-impregnated layer.
[FIG. 7] FIG. 7 is a diagram illustrating a contact angle between a droplet and the surface of the resin-impregnated layer of the composite material, which is used for calculating the surface energy of the surface of the resin-impregnated layer of the composite material.

Description of Embodiments

An embodiment of a refrigerant compressor, a refrigeration cycle apparatus including the refrigerant compressor, and a method for manufacturing the refrigerant compressor will be described below with reference to the drawings.

(1) Refrigeration Cycle Apparatus

An air conditioner 10 according to an embodiment of a refrigeration cycle apparatus is an apparatus that includes a scroll compressor 100 and uses a vapor compression refrigeration cycle to cool or heat the air in an air conditioning target space and thus cool and heat the air conditioning target space.

The type of refrigeration cycle apparatus in the scope of claims is not limited to an air conditioner. For example, the refrigeration cycle apparatus may be a chiller apparatus that cools water by exchanging heat between a refrigerant and water as a heat medium flowing through a heat medium circuit, or a hot water supply apparatus that heats water by exchanging heat between a refrigerant and water as a heat medium flowing through a heat medium circuit. In addition, the refrigeration cycle apparatus may be a refrigerator, a freezer, or the like, that cools air in a storage.

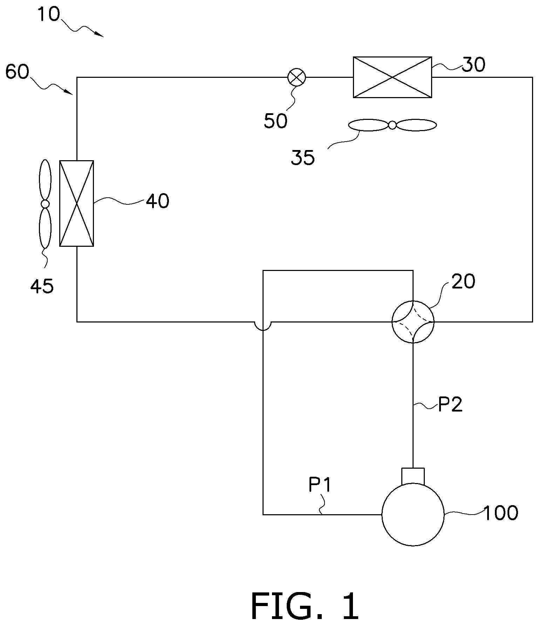

The air conditioner 10 mainly includes a refrigerant circuit 60. As illustrated in FIG. 1, the refrigerant circuit 60 includes the scroll compressor 100, a channel switching mechanism 20, a heat source heat exchanger 30, a utilization heat exchanger 40, and an expansion mechanism 50. The scroll compressor 100, the channel switching mechanism 20, the heat source heat exchanger 30, the utilization heat exchanger 40, and the expansion mechanism 50 are connected with pipes in the refrigerant circuit 60.

The refrigerant circuit 60 is filled with an R290 refrigerant (propane refrigerant). The R290 refrigerant has the excellent property of a low global warming potential. However, the R290 refrigerant is designated as CLASS 3 (higher flammability) in ISO817:2014 (refrigerant-name and safety class), and has a property of being flammable.

The scroll compressor 100 is a device that suctions and pressurizes a gas refrigerant having a low pressure in the refrigeration cycle (hereinafter, simply referred to as a low pressure in some cases) and discharges the gas refrigerant as a gas refrigerant having a high pressure in the refrigeration cycle (hereinafter, simply referred to as a high pressure in some cases). The scroll compressor 100 compresses the R290 refrigerant. Details of the scroll compressor 100 will be described below.

The channel switching mechanism 20 is a mechanism that switches the state of the refrigerant circuit 60 between a cooling state and a heating state. Although not limited thereto, the channel switching mechanism 20 is a four-way switching valve. When the refrigerant circuit 60 is in the cooling state, the refrigerant flows through the scroll compressor 100, the channel switching mechanism 20, the heat source heat exchanger 30, the expansion mechanism 50, the utilization heat exchanger 40, the channel switching mechanism 20, and the scroll compressor 100 in this order in the refrigerant circuit 60 (see the solid line in the channel switching mechanism 20 in FIG. 1). When the refrigerant circuit 60 is in the heating state, the refrigerant flows through the scroll compressor 100, the channel switching mechanism 20, the utilization heat exchanger 40, the expansion mechanism 50, the heat source heat exchanger 30, the channel switching mechanism 20, and the scroll compressor 100 in this order in the refrigerant circuit 60 (see the broken line in the channel switching mechanism 20 in FIG. 1).

The heat source heat exchanger 30 is a heat exchanger that exchanges heat between a medium serving as a heat source and a refrigerant. When the refrigerant circuit 60 is in the cooling state, the heat source heat exchanger 30 functions as a condenser (radiator) of the refrigerant. When the refrigerant circuit 60 is in the heating state, the heat source heat exchanger 30 functions as an evaporator (heat absorber) of the refrigerant.

The utilization heat exchanger 40 is a heat exchanger that exchanges heat between a temperature adjustment target (here, the air in the air conditioning target space) and the refrigerant. When the refrigerant circuit 60 is in the cooling state, the utilization heat exchanger 40 functions as an evaporator (heat absorber) of the refrigerant. When the refrigerant circuit 60 is in the heating state, the utilization heat exchanger 40 functions as a condenser (radiator) of the refrigerant.

The expansion mechanism 50 decompresses a high-pressure refrigerant (mainly liquid refrigerant) passing through the expansion mechanism 50 into a low-pressure refrigerant (two-phase refrigerant including liquid and gas). The expansion mechanism 50 is, for example, an electronic expansion valve. However, the type of the expansion mechanism 50 is not limited to an electronic expansion valve, and may be a thermostatic expansion valve having a temperature sensitive tube or a capillary tube.

The cooling operation and the heating operation performed by the air conditioner 10 will be described.

When the air conditioner 10 performs a cooling operation, the scroll compressor 100 suctions and pressurizes a low-pressure gas refrigerant and discharges the gas refrigerant as a high-pressure gas refrigerant. The high-pressure gas refrigerant discharged from the scroll compressor 100 passes through the channel switching mechanism 20 and is supplied to the heat source heat exchanger 30 functioning as a condenser. The heat source heat exchanger 30 exchanges heat between a medium (here, the air supplied by a heat source fan 35) serving as a heat source and the high-pressure gas refrigerant to condense the high-pressure gas refrigerant into a high-pressure liquid refrigerant. The high-pressure liquid refrigerant flowing out of the heat source heat exchanger 30 passes through the expansion mechanism 50 to become a low-pressure gas-liquid two phase refrigerant, and is supplied to the utilization heat exchanger 40 functioning as an evaporator. The utilization heat exchanger 40 exchanges heat between the air in the air conditioning target space supplied by a utilization fan 45 and the low-pressure gas-liquid two phase refrigerant to evaporate the liquid refrigerant contained in the gas-liquid two phase refrigerant into a low-pressure gas refrigerant. At this time, the air in the air conditioning target space is cooled by the refrigerant. The low-pressure gas refrigerant flowing out of the utilization heat exchanger 40 passes through the channel switching mechanism 20 and is suctioned into the scroll compressor 100 again.

When the air conditioner 10 performs a heating operation, the scroll compressor 100 suctions and pressurizes a low-pressure gas refrigerant and discharges the gas refrigerant as a high-pressure gas refrigerant. The high-pressure gas refrigerant discharged from the scroll compressor 100 passes through the channel switching mechanism 20 and is supplied to the utilization heat exchanger 40 functioning as a condenser. The utilization heat exchanger 40 exchanges heat between the air in the air conditioning target space supplied by the utilization fan 45 and the high-pressure gas refrigerant to condense the high-pressure gas refrigerant into a high-pressure liquid refrigerant. At this time, the air in the air conditioning target space is heated by the refrigerant. The high-pressure liquid refrigerant flowing out of the utilization heat exchanger 40 passes through the expansion mechanism 50 to become a low-pressure gas-liquid two phase refrigerant, and is supplied to the heat source heat exchanger 30 functioning as an evaporator. The heat source heat exchanger 30 exchanges heat between a medium (here, the air supplied by the heat source fan 35) serving as a heat source and the low-pressure gas-liquid two phase refrigerant to evaporate the liquid refrigerant contained in the gas-liquid two phase refrigerant into a low-pressure gas refrigerant. The low-pressure gas refrigerant flowing out of the heat source heat exchanger 30 passes through the channel switching mechanism 20 and is suctioned into the scroll compressor 100 again.

Here, the case where the air conditioning apparatus as an example of the air conditioner 10 is an apparatus that performs the cooling operation and the heating operation has been described as an example, but the air conditioning apparatus may be an apparatus that performs only one of the cooling operation and the heating operation. In this case, the air conditioning apparatus as an example of the air conditioner 10 does not need to include the channel switching mechanism 20. Further, the device forming the air conditioner 10 described here is merely an example, and the air conditioner 10 may include devices other than those described here.

(2) Overall Configuration of Scroll Compressor

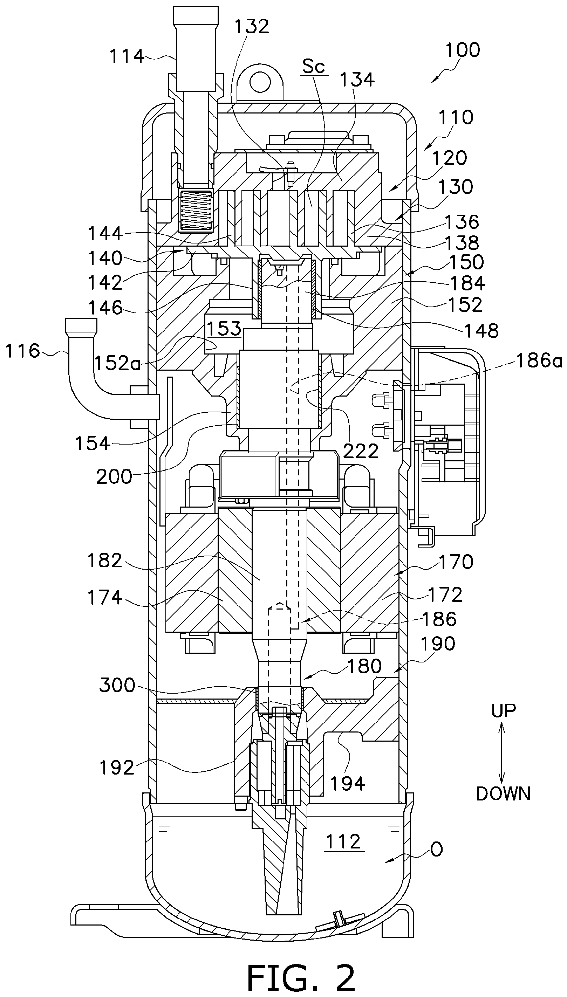

An outline of the scroll compressor 100 as an embodiment of the refrigerant compressor will be described with reference to FIG. 2 which is a schematic longitudinal sectional view of the scroll compressor 100.
The scroll compressor is merely an example of the refrigerant compressor in the scope of claims, and may be a volumetric refrigerant compressor other than the scroll compressor or a centrifugal refrigerant compressor as long as the refrigerant compressor includes a slide bearing such as slide bearings 200 and 300 described below.
Here, what is called a high-pressure dome type scroll compressor in which the space in which a motor 170 of a casing 110 described below is provided has a high pressure in the refrigeration cycle will be described as an example; however, the scroll compressor may be what is called a low-pressure dome type scroll compressor in which the space in which the motor of the casing is provided has a low pressure in the refrigeration cycle.
As illustrated in FIGS. 1 and 2, the scroll compressor 100 mainly includes the casing 110, a compression mechanism 120, a housing 150, the motor 170, a drive shaft 180, a lower bearing housing 190, and a refrigerating machine oil O stored in the casing 110.

(2-1) Casing

The scroll compressor 100 includes the vertically elongated cylindrical casing 110 (see FIG. 2). The casing of the scroll compressor is not limited to a vertically elongated shape, and may have a horizontally elongated shape. In other words, the scroll compressor is not limited to a vertical scroll compressor, and may be a horizontal scroll compressor in which a compression mechanism, a housing, a motor, and the like, are arranged side by side in a horizontal direction in a casing (the axial direction of the drive shaft 180 extends in the horizontal direction).
The casing 110 accommodates therein various members constituting the scroll compressor 100, including the compression mechanism 120, the housing 150, the motor 170, the drive shaft 180, and the lower bearing housing 190 (see FIG. 2). The compression mechanism 120 is provided in an upper portion of the casing 110. In the casing 110, the housing 150 is provided below the compression mechanism 120, the motor 170 is provided below the housing 150, and the lower bearing housing 190 is provided below the motor 170.
An oil reservoir space 112 is formed at the bottom of the casing 110. The refrigerating machine oil O for lubricating various slide areas of the scroll compressor 100 is stored in the oil reservoir space 112.
The refrigerating machine oil O is a polyalkylene glycol-based refrigerating machine oil (PAG) having an OH group at the terminal of the chemical structure. However, the refrigerating machine oil O is not limited to PAG, and may be a polyol ester-based refrigerating machine oil (POE) having an OH group at the terminal of the chemical structure or a polyvinyl ether-based refrigerating machine oil (PVE) having an OH group at the terminal of the chemical structure.
The refrigerating machine oil having an OH group at the terminal has a high polarity, while the R290 refrigerant (propane) has a low polarity. Therefore, the miscibility between the refrigerating machine oil O stored in the casing 110 and the R290 refrigerant is low.

Therefore, it is possible to suppress an increase in the amount of refrigerant with which the air conditioner 10 is filled (since it is not necessary to consider dissolution of the R290 refrigerant in the refrigerating machine oil O).

A suction pipe 114 and a discharge pipe 116 are attached to the casing 110 so that the inside and the outside of the casing 110 communicate with each other (see FIG. 2).

The scroll compressor 100 suctions the low-pressure refrigerant in the refrigeration cycle from a suction pipe P1 (see FIG. 1) of the air conditioner 10 via the suction pipe 114, compresses the refrigerant by the compression mechanism 120, and discharges the refrigerant from a discharge port 132 (see FIG. 2), which will be described below, of the compression mechanism 120. The refrigerant discharged from the discharge port 132 flows into a space below the housing 150 via a passage (not illustrated) formed in a fixed scroll 130 of the compression mechanism 120 and the housing 150. The refrigerant that has flowed into the space below the housing 150 flows out to a discharge pipe P2 (see FIG. 1) of the air conditioner 10 via the discharge pipe 116.

(2-2) Compression Mechanism

The compression mechanism 120 mainly includes the fixed scroll 130 and a movable scroll 140.

The fixed scroll 130 is placed on the housing 150 and fixed to the housing 150 with a fixing tool (for example, a bolt) (not illustrated).

As illustrated in FIG. 2, the fixed scroll 130 mainly includes a first end plate 134, a first wrap 136, and a peripheral edge portion 138. The first end plate 134 is a disc-shaped member. The first wrap 136 is a wall-shaped member that protrudes from the first end plate 134 toward the movable scroll 140 (downward in FIG. 2). When the fixed scroll 130 is viewed from the movable scroll 140 side, the first wrap 136 is formed in a spiral shape (involute shape) from the vicinity of the center of the first end plate 134 toward the outer peripheral side. The peripheral edge portion 138 is a thick cylindrical member that protrudes from the first end plate 134 toward the movable scroll 140. The peripheral edge portion 138 is provided to surround the periphery of the first wrap 136.

As illustrated in FIG. 2, the movable scroll 140 mainly includes a second end plate 142, a second wrap 144, and a boss portion 146. The second end plate 142 is a disc-shaped member, and the second wrap 144 is a wall-shaped member that protrudes from the second end plate 142 toward the fixed scroll 130 (upward in FIG. 2). When the movable scroll 140 is viewed from the fixed scroll 130 side, the second wrap 144 is formed in a spiral shape (involute shape) from the vicinity of the center of the second end plate 142 toward the outer peripheral side.

The boss portion 146 of the movable scroll 140 is provided in a crank chamber 153 (described below) formed by the housing 150. The boss portion 146 is formed in a cylindrical shape. The boss portion 146 extends to protrude from the second end plate 142 toward the motor 170 (downward in FIG. 2). An upper portion of the cylindrical boss portion 146 is closed by the second end plate 142. A slide bearing 148 is provided in a hollow portion of the boss portion 146. An eccentric portion 184 (pin shaft) of the drive shaft 180 described below is inserted into the hollow portion of the boss portion 146 (see FIG. 2). The slide bearing 148 slidably supports the eccentric portion 184 of the drive shaft 180. The drive shaft 180 is connected to a rotor 174 of the motor 170 described below, and therefore, when the motor 170 is operated and the rotor 174 rotates, the movable scroll 140 turns. The movable scroll 140 turned by the motor 170 does not rotate but revolves with respect to the fixed scroll 130 by the action of Oldham's coupling (not illustrated).

The fixed scroll 130 and the movable scroll 140 are combined in a state where a surface (a lower surface in FIG. 2) of the first end plate 134 on the movable scroll 140 side and a surface (an upper surface in FIG. 2) of the second end plate 142 on the fixed scroll 130 side face each other. As a result, a compression chamber Sc is formed, which is surrounded by the first end plate 134, the second end plate 142, the first wrap 136, and the second wrap 144 (see FIG. 2).

When the movable scroll 140 turns with respect to the fixed scroll 130, the low-pressure refrigerant flows into the compression chamber Sc of the compression mechanism 120 from the suction pipe 114, and the refrigerant is compressed and the pressure increases as the refrigerant moves to the compression chamber Sc on the center side. The high-pressure refrigerant compressed by the compression mechanism 120 is discharged from the discharge port 132 formed substantially at the center of the first end plate 134 and flows into a refrigerant path (not illustrated) formed over the fixed scroll 130 and a main body portion 152 (described below) of the housing 150.

(2-3) Housing

The housing 150 supports the fixed scroll 130 and the movable scroll 140. Further, the housing 150 axially supports the drive shaft 180.

As illustrated in FIG. 2, the housing 150 mainly includes the main body portion 152 and an upper bearing housing 154.

The main body portion 152 is a cylindrical member fixed to the inner surface of the casing 110. The fixed scroll 130 is provided such that the peripheral edge portion 138 of the fixed scroll 130 is in contact with the main body portion 152 of the housing 150 and is fixed to the housing 150 with a fixing member (for example, a bolt) (not illustrated). The main body portion 152 supports the fixed scroll 130 fixed to the main body portion 152. The main body portion 152 supports the movable scroll 140 provided between the fixed scroll 130 and the main body portion 152 of the housing 150. Specifically, the main body portion 152 supports the movable scroll 140 from below via Oldham's coupling (not illustrated) provided above the housing 150.

As illustrated in FIG. 2, the main body portion 152 includes a first concave portion 152a that is arranged to be concave at the center. The first concave portion 152a surrounds the side surface of the crank chamber 153 in which the boss portion 146 of the movable scroll 140 is provided.

During the steady operation of the scroll compressor 100 (in a state where the operation of the scroll compressor 100 is stable), the pressure of the crank chamber 153 becomes a high pressure in the refrigeration cycle. As a result, during the steady operation of the scroll compressor 100, the second end plate 142 facing the crank chamber 153 is pushed toward the fixed scroll 130 by the pressure.

The upper bearing housing 154 is formed in a cylindrical shape. The slide bearing 200 that axially supports the drive shaft 180 in a rotatable manner is provided inside the cylindrical upper bearing housing 154. The slide bearing 200 will be described in detail below.

(2-4) Motor

The motor 170 is a drive mechanism that turns the movable scroll 140 to drive the compression mechanism 120.

The motor 170 includes an annular stator 172 fixed to an inner surface of the casing 110 and a rotor 174 provided inside the stator 172 (see FIG. 2).

The rotor 174 is rotatably accommodated inside the stator 172 with a slight gap (air gap) from the stator 172. The rotor 174 is a cylindrical member into which the drive shaft 180 is inserted. The motor 170 rotates the rotor 174 to rotate the drive shaft 180, thereby driving the movable scroll 140 and turning the movable scroll 140 with respect to the fixed scroll 130.

(2-5) Drive Shaft

The drive shaft 180 connects the rotor 174 of the motor 170 and the movable scroll 140 of the compression mechanism 120. The drive shaft 180 transmits the driving force of the motor 170 to the movable scroll 140 of the compression mechanism 120.

The drive shaft 180 mainly includes a main shaft 182 and the eccentric portion 184 (see FIG. 2).

The main shaft 182 extends in the rotation axis direction of the drive shaft 180 from the oil reservoir space 112 to the crank chamber 153. The main shaft 182 is rotatably supported by the slide bearing 200 of the upper bearing housing 154 and the slide bearing 300 of the lower bearing housing 190 described below. Further, the main shaft 182 is inserted into the rotor 174 of the motor 170 between the upper bearing housing 154 of the housing 150 and the lower bearing housing 190 and is connected to the rotor 174. The center axis of the main shaft 182 coincides with the rotation axis of the drive shaft 180.

The eccentric portion 184 is provided at an end portion of the main shaft 182. The center axis of the eccentric portion 184 is eccentric with respect to the rotation axis of the drive shaft 180. The eccentric portion 184 is inserted into the boss portion 146 of the movable scroll 140 and is rotatably supported by the slide bearing 148 provided inside the boss portion 146.

An oil passage 186 is formed inside the drive shaft 180. The oil passage 186 includes a main path 186a and a branch path (not illustrated). The main path 186a extends along the axial direction of the drive shaft 180 from an end portion of the drive shaft 180 on the oil reservoir space 112 side to an end portion of the drive shaft 180 on the boss portion 146 side. The branch path extends from the main path 186a in a direction intersecting the axial direction of the drive shaft 180. The oil in the oil reservoir space 112 is pumped up by a pump (not illustrated) provided at the lower end of the drive shaft 180, passes through the oil passage 186, and is finally supplied to a slide portion between the drive shaft 180 and the slide bearing 148, a slide portion between the drive shaft 180 and the slide bearing 200, a slide portion between the drive shaft 180 and the slide bearing 300, a slide area of the compression mechanism 120, and the like.

(2-6) Lower Housing

As illustrated in FIG. 2, the lower bearing housing 190 mainly includes a lower bearing portion 192 and a plurality of arms 194. The lower bearing housing 190 axially supports the drive shaft 180.

The lower bearing portion 192 includes the slide bearing 300 that rotatably supports the drive shaft 180. The slide bearing 300 will be described below.

The arm 194 supports the lower bearing portion 192. The arm 194 is a rod-shaped member. Each of the arms 194 extends from the lower bearing portion 192 toward the casing 110 and is fixed to the inner surface of the casing 110.

(3) Slide Bearing

The slide bearings 200 and 300 that axially support the drive shaft 180 will be described in detail.

The slide bearings 200 and 300 are cylindrical members. Each of the slide bearings 200 and 300 may be a single member, or may have a cylindrical shape formed by combining a plurality of members (for example, by combining a pair of semi-cylindrical slide bearings). Since the slide bearings 200 and 300 are similar members, here, the slide bearing will be described by taking the slide bearing 200 as an example, and the description of the slide bearing 300 will be omitted.

The slide bearing 200 has a composite material CM including a back metal 210 and a resin-impregnated layer 220, as illustrated in FIG. 3B that is an enlarged view of a part of a cross-section obtained by cutting the cylindrical slide bearing 200 in a direction orthogonal to the axial direction of the cylinder. In other words, the slide bearing 200 is manufactured from the composite material CM including the back metal 210 and the resin-impregnated layer 220. Since the slide bearing 200 has a cylindrical shape, the actual cross-sectional shape of the slide bearing 200 is an arc shape, but in FIG. 3B, the cross-section of the slide bearing 200 is drawn in a linear shape.

In the resin-impregnated layer 220 of the slide bearing 200, a porous metal M is impregnated with a resin P including a fluorine resin (see FIG. 3B). Although the material of the resin-impregnated layer 220 is not limited, for example, the metal M such as an iron-based metal, a copper-iron-based metal, a copper-based metal, or a stainless steel-based metal is used. According to the present embodiment, the porous metal M used for the resin-impregnated layer 220 is bronze. The resin P with which the resin-impregnated layer 220 is impregnated includes PTFE (polytetrafluoroethylene) as a fluorine resin. The resin P further includes a filler and the like.

The composite material CM used for the slide bearing 200 is formed by, for example, sintering bronze powder into a porous state on the back metal 210 made of steel or the like and impregnating it with a resin including PTFE.

The slide bearing 200 is formed from a base material (a member in which a layer obtained by impregnating a porous metal with a resin including PTFE is laminated on the back metal 210), for example, as follows.

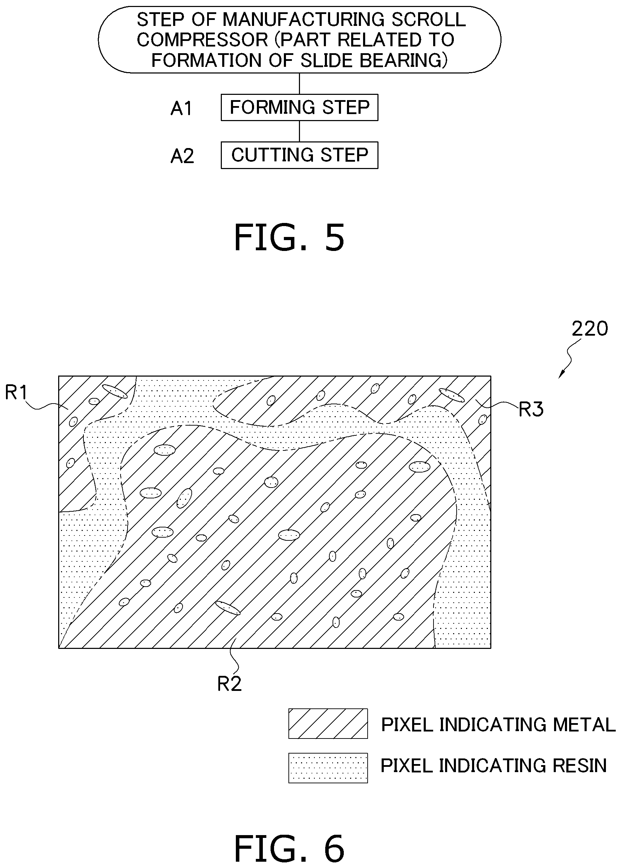

The content related to the formation of the slide bearing 200 of the scroll compressor 100 will be described with reference to a schematic flow chart of a method for manufacturing the scroll compressor 100 (particularly, a part related to the formation of the slide bearing 200) in FIG. 5. The content related to the formation of the slide bearing 200 described below is merely an example of the step of forming the slide bearing 200 and may include, for example, other steps.

First, a base material having an appropriate size is processed into a cylindrical shape in a forming step (step A1). In other words, in step A1, the composite material CM to be the slide bearing 200 is processed into a cylindrical shape. When processed into a cylindrical shape, in the base material, the resin-impregnated layer 220 (before being subjected to the cutting processing described below) is provided on the inner peripheral side, and the back metal 210 is provided on the outer peripheral side. Although not limited, in step A1, for example, a flat plate-shaped base material is processed into a cylindrical shape in the forming step. Specifically, the flat plate-shaped base material is processed into a cylindrical shape by, for example, roll bending. The shape of the base material before being processed into a cylindrical shape is not limited to a flat plate shape, and may be another shape.

Subsequently, in step A2, the resin-impregnated layer 220 forming a slide surface 222 (a surface in contact with the main shaft 182 of the drive shaft 180 when used as the slide bearing 200) of the base material processed into a cylindrical shape is cut, and the metal exposure rate of the cut surface (the slide surface 222) is set to a predetermined metal exposure rate. The reason why step A2 is performed will be described.

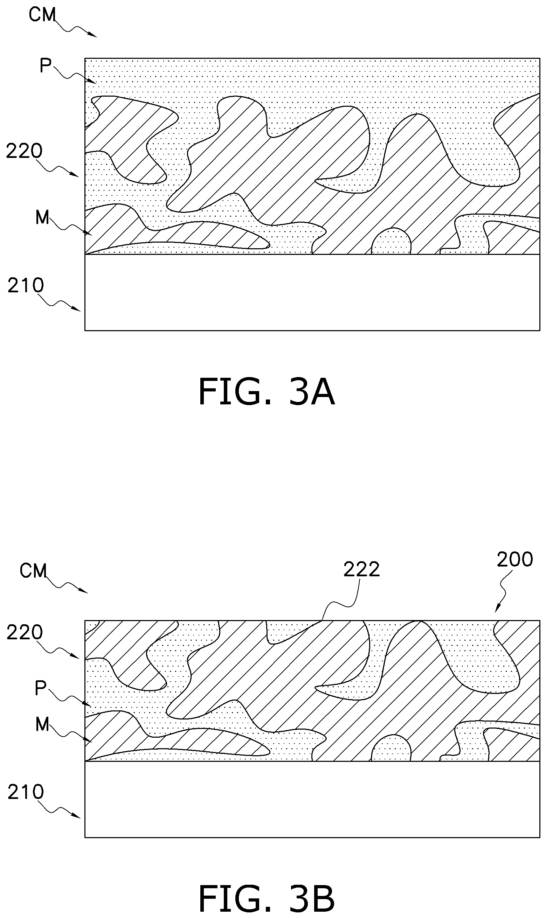

In the base material of the slide bearing 200, most of the surface of the resin-impregnated layer 220 (the inner peripheral surface of the cylindrical base material provided on the side opposite to the back metal 210) is covered with the resin P, and the metal M is not exposed, as illustrated in FIG. 3A. Since the resin P has low abrasion resistance, if the slide bearing is used in this state, the surface of the slide bearing axially supporting the drive shaft 180 abrades, and even if the dimension of the slide bearing is appropriate at the start of use of the scroll compressor 100, the dimension of the slide bearing may change during use and become inappropriate.

Therefore, in the manufacturing of the slide bearing 200 according to the present embodiment, the surface of the resin-impregnated layer 220 is cut in step A2 so that the metal exposure rate of the cut surface (the slide surface 222) becomes a predetermined metal exposure rate ER. By setting the metal exposure rate of the slide surface 222 to the predetermined metal exposure rate ER, the abrasion resistance of the slide surface 222 is improved, and the dimensional change of the slide bearing 200 due to aging deterioration can be suppressed.

When the resin-impregnated layer 220 in which the porous bronze is impregnated with the resin including a fluorine resin is actually cut, a positive correlation is obtained between the cut amount and the metal exposure rate. The correlation between the cut amount and the metal exposure rate may be obtained as appropriate for the base material to be actually used.

The predetermined metal exposure rate ER is determined in consideration of the value of surface energy in addition to the viewpoint of abrasion resistance. Specific descriptions will be given.

The surface energy is a physical quantity expressed in N/m (or J/m$^2$). The value of the surface energy of the surface (the slide surface 222) of the slide bearing 200 affects the adhesion between the surface (the slide surface 222) of the slide bearing 200 and the refrigerating machine oil O. When the surface energy is high, the adhesion between the surface of the slide bearing 200 and the refrigerating machine oil O is high, and the refrigerating machine oil O is likely to remain between the surface of the slide bearing 200 and the surface of the drive shaft 180. On the other hand, when the surface energy is low, the adhesion between the surface of the slide bearing 200 and the refrigerating machine oil O is low, and the refrigerating machine oil O is less likely to remain between the surface of the slide bearing 200 and the surface of the drive shaft 180.

In the scroll compressor 100 according to the present embodiment, as described above, since PAG, POE, or PVE having an OH group at the terminal of the chemical structure is used as the refrigerating machine oil O, the miscibility between the R290 refrigerant and the refrigerating machine oil O is low, and the refrigerating machine oil O having a high viscosity is used to lubricate the slide bearing 200. Under this condition, when the value of the surface energy of the surface (the slide surface 222) of the slide bearing 200 is large, the refrigerating machine oil O is likely to remain between the surface of the slide bearing 200 and the surface of the drive shaft 180, and as a result, the temperature of the slide portion between the slide bearing 200 and the drive shaft 180 and the components provided around the slide portion may increase beyond an appropriate temperature range, and the reliability of the scroll compressor 100 may decrease. Therefore, it is preferable that the value of the surface energy of the surface (the slide surface 222) of the slide bearing 200 is low.

In general, the value of the surface energy of the metal is larger than the value of the surface energy of the resin.

For example, the surface energy of copper is about 1100 mN/m. In addition, the surface energy of other metals is generally several hundred mN/m or more. For example, the surface energy of stainless steel is about 700 to 1100 mN/m. On the other hand, the surface energy of PTFE is about 18 mN/m, which is much smaller than that of metals.

Therefore, the predetermined metal exposure rate ER is preferably large from the viewpoint of abrasion resistance, whereas the predetermined metal exposure rate ER is preferably low from the viewpoint of suppressing the value of the surface energy of the slide surface 222 of the slide bearing 200.

In the slide bearing 200, from the viewpoint of the compatibility between the abrasion resistance and the suppression of the temperature increase at the slide portion between the slide bearing 200 and the drive shaft 180, the predetermined metal exposure rate ER is determined so that the surface energy on the surface of the resin-impregnated layer 220 is less than 40 mN/m.

From the viewpoint of suppressing the temperature increase at the slide portion between the slide bearing 200 and the drive shaft 180, more preferably, the predetermined metal exposure rate ER is determined so that the surface energy on the surface of the resin-impregnated layer 220 is less than 35 mN/m. From the viewpoint of suppressing the temperature increase at the slide portion between the slide bearing 200 and the drive shaft 180, more preferably, the predetermined metal exposure rate ER is determined so that the surface energy on the surface of the resin-impregnated layer 220 is less than 30 mN/m.

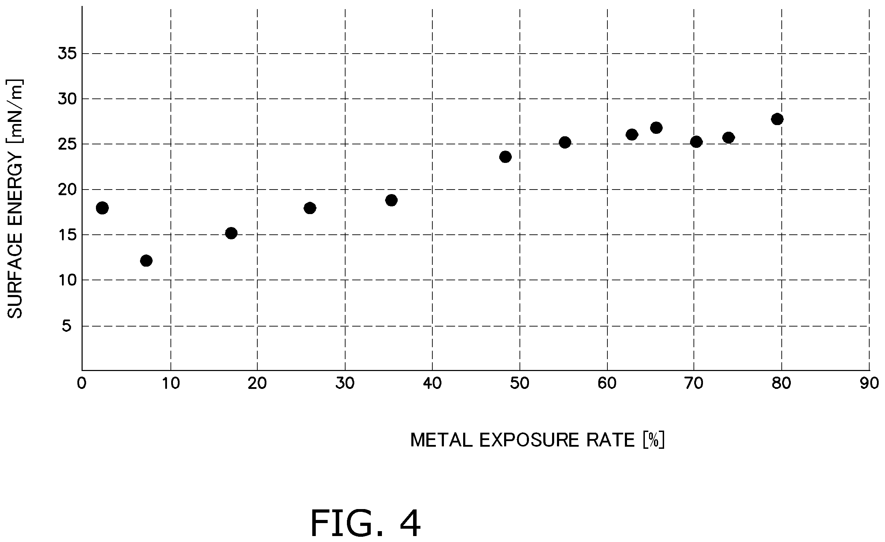

FIG. 4 is a graph illustrating actually measured values of the surface energy [mN/m] when the metal exposure rate [%] of the surface of the slide bearing 200 is changed (the method for calculating the surface energy used according to the present embodiment will be described below).

From the viewpoint of the value of the surface energy obtained from this graph and the viewpoint of the abrasion resistance of the surface of the slide bearing 200, the predetermined metal exposure rate ER is determined in the range of 5% to 80%.

Preferably, the predetermined metal exposure rate ER is determined in the range of 20% to 70%. More preferably, the predetermined metal exposure rate ER is determined in the range of 20% to 60%. Still more preferably, the predetermined metal exposure rate ER is determined in the range of 30% to 60%. Still more preferably, the predetermined metal exposure rate ER is determined in the range of 30% to 50%.

By setting the predetermined metal exposure rate ER to a value in the above range, it is possible to achieve the scroll compressor 100 having excellent abrasion resistance and capable of suppressing a temperature increase at the slide portion between the slide bearing 200 and the drive shaft 180.

The reason why the value of the surface energy of the surface of the slide bearing 200 is relatively low as illustrated in FIG. 4 even under the condition that the metal exposure rate is relatively large and the surface energy of the metal is likely to have a relatively large influence on the surface energy of the surface of the slide bearing 200 is considered as follows.

According to the present embodiment, the metal exposure rate of the surface of the slide bearing 200 is measured by obtaining a scanning electron microscope image (SEM image) of the surface (the slide surface 222) of the slide bearing 200 at a magnification of 200, dividing the SEM image into a portion where the metal M is present and a portion where the resin P is present by image processing (binarization processing), and obtaining the ratio of the pixels indicating the portion where the metal M is present to all the pixels of the image.

In the actual SEM image, the region where the metal M is present and the region where the resin P is present are not clearly separated from each other, and as in the SEM image schematically illustrated in FIG. 6, the region where the resin P is present (the portion illustrated by dot hatching in FIG. 6) is also scattered in the region where the metal M is present (the portion illustrated by oblique hatching in FIG. 6).

For example, in the actual SEM image of the surface of the resin-impregnated layer 220 of the composite material CM in which the metal exposure rate is measured to be 86% (the exposure rate of the resin P is 14%) although it falls out of the above-described range (5% to 80%) of the metal exposure rate ER, when the metal exposure rate is calculated on the assumption that all the regions where the metal M is mainly present (in the description with reference to FIG. 6, regions R1, R2, and R3 surrounded by the two dot chain lines and hatched with oblique lines) are occupied by the metals M, the metal exposure rate is 88% (the exposure rate of the resin P is 12%). In other words, on the surface of the resin-impregnated layer 220 of the composite material CM having a metal exposure rate of 86%, 14% (= (14% - 12%)/14%) of the entire exposed resin P (the resin P occupying 14% of the surface) is present on the region where the metal M is mainly present. When the resin P of 2% ((14% - 12%)/88%) or more is present in the region where the metal M is mainly present, an increase in the surface energy with respect to an increase in the metal exposure rate can be suppressed.

As described above, it is presumed that the resins P are also scattered in the region where the metal M is mainly present, and thus an increase in the surface energy with respect to an increase in the metal exposure rate is suppressed.

The reason why the resins P are scattered in the region where the metal M is mainly present is presumed to be due to the occurrence of "transfer". The term "transfer" as used herein means that a material removed by abrasion adheres to another place. In the case of the resin-impregnated layer 220 of the composite material CM, it is presumed that the resin P is transferred onto the metal M and thinly spread on the surface of the metal M (the resins P are scattered on the surface of the metal M) during the cutting processing in step A2 described above or due to the sliding between the drive shaft 180 and the resin-impregnated layer 220.

(4) Method for Calculating Surface Energy

The method for calculating the surface energy used in the above description will be described.

First, in general, the surface energy is a value calculated by using a contact angle θ (the contact angle θ will be described below) of each droplet that is measured when two or more types of solutions are dropped on a flat surface of an object for which the surface energy is to be calculated. Here, the surface energy is calculated using two types of solutions.

Since the method for calculating the surface energy is a method described above, it is difficult to calculate the surface energy using the cylindrical slide bearing 200 itself (since the slide surface 222 of the cylindrical slide bearing 200 is a curved surface).

Therefore, the surface energy calculated by the method described below (the surface energy of the slide surface 222 of the slide bearing 200) is not a value calculated using the actual slide surface 222 of the cylindrical slide bearing 200, but a value calculated using the flat surface of the flat plate-shaped composite material CM (the same composite material CM as that used to use the slide bearing 200) having the same metal exposure rate as that of the slide surface 222 of the slide bearing 200. However, in order to simplify the description, here, the surface energy calculated by the following method is defined as the surface energy of the slide surface 222 of the slide bearing 200.

According to the present embodiment, the surface energy is calculated as follows.

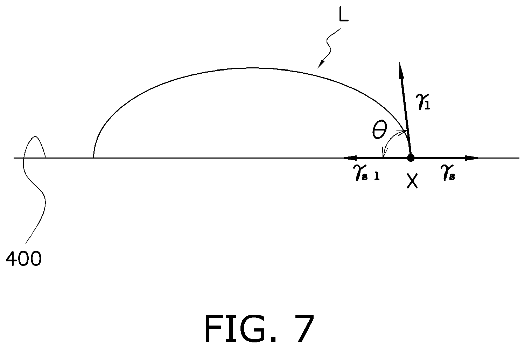

As illustrated in FIG. 7, it is assumed that a droplet L is placed on a flat surface 400 (the surface of the resin-impregnated layer 220 of the composite material CM) of an object for which the surface energy is to be calculated. At this time, the droplet L forms the predetermined contact angle θ with the flat surface 400.

In this state, three surface tensions ($\gamma_s$: surface tension of a solid, $\gamma_1$: surface tension of a liquid, $\gamma_{s1}$: interfacial tension between a solid and a liquid) acting on a point X in FIG. 7 is in equilibrium. This relationship is expressed by the following equation 1 (Young's equation).

$$[\text{Equation 1}]$$
$$\gamma_s = \gamma_{sl} + \gamma_l \cos\theta$$

Further, with respect to $\gamma_{s1}$ that is the interfacial tension between a solid and a liquid, Equation 2 called Extended Fowkes equation is known.

$$[\text{Equation 2}]$$
$$\gamma_{sl} = \gamma_s + \gamma_l - 2\sqrt{\gamma_s^d \cdot \gamma_l^d} - 2\sqrt{\gamma_s^p \cdot \gamma_l^p}$$

Then, by combining Equation 1 and Equation 2, the following Equation 3 (Owens equation) is obtained.

$$[\text{Equation 3}]$$
$$(1 + \cos\theta)\ \gamma_l = 2\sqrt{\gamma_s^d \cdot \gamma_l^d} + 2\sqrt{\gamma_s^p \cdot \gamma_l^p}$$

Here, the symbols in Equation 3 mean the following values.

θ:     contact angle (see FIG. 7)
$\gamma_1$:     surface tension of liquid
$\gamma_s^d$  :     dispersion force component of solid
$\gamma_s^p$  :     polar component of solid
$\gamma_l^d$  :     dispersion force component of liquid
$\gamma_l^p$  :     polar component of liquid

According to the present embodiment, θ is measured by using two types of liquids whose components $\gamma_l^d$ and $\gamma_l^p$ of the surface tension $\gamma_1$ are known, and these values are substituted into Equation 3, and two equations into which $\gamma_l^d$, $\gamma_l^p$, and θ are substituted are simultaneously solved, so that the surface tension $\gamma_s$ of

the adherend surface (the surface of the resin-impregnated layer 220) and their components $\gamma_s^d$ and $\gamma_s^p$ are obtained.

For the solution, for example, water ($\gamma_1$ = 72.8 mN/m, $\gamma_l^d = 21.8\ \text{mN/m}$, $\gamma_l^p = 51.0\ \text{mN/m}$) and methylene iodide ($\gamma_1$ = 50.8 mN/m, $\gamma_l^d = 49.5\ \text{mN/m}$, $\gamma_l^p = 1.3\ \text{mN/m}$) can be used. The contact angles θ of the respective solutions are obtained by actual measurement and substituted into Equation 3, and the two equations are simultaneously solved so that $\gamma_s^d$ and $\gamma_s^p$ of the adherend surface (the surface of the resin-impregnated layer 220) and the sum thereof, i.e., the surface tension $\gamma_s$ ( $= \gamma_s^d + \gamma_s^p$ ) can be obtained. The value of the surface tension $\gamma_s$ of the adherend surface (the surface of the resin-impregnated layer 220) obtained here is the value of the surface energy of the adherend surface (the surface of the resin-impregnated layer 220).

In the calculation of the surface energy in the graph of the correlation between the metal exposure rate and the surface energy in FIG. 4, the contact angle θ is measured as follows by using a contact angle measurement method (static drop method) described in JIS R 3257:1999.

Further, in the calculation of the surface energy in the graph of the correlation between the metal exposure rate and the surface energy in FIG. 4, the contact angle θ is measured with water ($\gamma_1$ = 72.8 mN/m, $\gamma_l^d = 21.8\ \text{mN/m}$, $\gamma_l^p = 51.0\ \text{mN/m}$) and n-hexadecane ($\gamma_1$ = 27.6 mN/m, $\gamma_l^d = 27.6\ \text{mN/m}$, $\gamma_l^p = 0.0\ \text{mN/m}$) as solution instead of water and methylene iodide.

The operator drops 2 μl of these solutions on the surface of the resin-impregnated layer 220 having a known metal exposure rate (the metal exposure rate is measured from an SEM image at a magnification of 200), and after a waiting time for 1000 ms, the contact angle is measured using Drop Master 702 (contact-angle meter) manufactured by Kyowa Interface Science Co., Ltd. The contact angle is measured five times for each solution, the maximum value and the minimum value obtained in the five measurements are excluded as outliers, and the average of the remaining values is taken as the value of the contact angle θ in each solution. Then, the operator calculates the value of the surface energy of the adherend surface (the surface of the resin-impregnated layer 220) illustrated in FIG. 4 by using Equation 3 (Owens equation) in the above-described method.

(5) Characteristics

Here, regarding the slide bearing, the characteristics of the scroll compressor 100 and the air conditioner 10 will be described using the slide bearing 200 as an example, but the slide bearing 200 can be read as the slide bearing 300.
(5-1)
The scroll compressor 100 includes the compression mechanism 120, the drive shaft 180, the cylindrical slide bearing 200, the casing 110, and the refrigerating machine oil O. The compression mechanism 120 compresses the R290 refrigerant (propane refrigerant). The drive shaft 180 transmits power to the compression mechanism 120. The slide bearing 200 axially supports the drive shaft 180. The casing 110 houses the compression mechanism 120, the drive shaft 180, and the slide bearing 200. The refrigerating machine oil O is stored in the casing 110. The refrigerating machine oil O is PAG (polyalkylene glycol), POE (polyol ester), or PVE (polyvinyl ether) having an OH group at the terminal of the chemical structure. The slide bearing 200 includes the composite material CM including the resin-impregnated layer 220 in which the porous metal M is impregnated with the resin P including PTFE. The slide surface 222 of the slide bearing 200 is formed of the resin-impregnated layer 220, and the metal is exposed at the predetermined metal exposure rate ER. The surface energy on the surface of the resin-impregnated layer 220 of the composite material CM at the predetermined metal exposure rate ER is less than 40 mN/m.
When the surface energy of the slide surface 222 of the slide bearing 200 is high, the refrigerating machine oil O is likely to remain at the slide portion between the slide bearing 200 and the drive shaft 180.
On the other hand, since the scroll compressor 100 uses the slide bearing 200 in which the surface energy of the slide surface 222 of the slide bearing 200 is suppressed to be low, the refrigerating machine oil O can be quickly discharged from the slide portion between the slide bearing 200 and the drive shaft 180, and the temperature increase of the components constituting the slide portion between the slide bearing 200 and the drive shaft 180 can be suppressed.
It is preferable that the surface energy on the surface of the resin-impregnated layer 220 of the composite material CM at the predetermined metal exposure rate ER is less than 35 mN/m. It is more preferable that the surface energy on the surface of the resin-impregnated layer 220 of the composite material CM at the predetermined metal exposure rate ER is less than 30 mN/m.
As described above, by using the slide bearing 200 in which the surface energy of the slide surface 222 of the slide bearing 200 is suppressed to be low, it is possible to quickly discharge the refrigerating machine oil O from the slide portion between the slide bearing 200 and the drive shaft 180 and to suppress the temperature increase of the components constituting the slide portion between the slide bearing 200 and the drive shaft 180.

(5-2)

In the scroll compressor 100, the predetermined metal exposure rate ER is in the range of 5% to 80%.

Here, the metal exposure rate of 5% at lowest is ensured so that the abrasion resistance of the slide bearing 200 is easily ensured. On the other hand, here, the metal exposure rate is limited to 80% or less so that the surface energy of the surface of the slide bearing 200 can be suppressed to less than 40 mN/m (see FIG. 4).

The predetermined metal exposure rate ER is preferably in the range of 20% to 70%, more preferably in the range of 20% to 60%, still more preferably in the range of 30% to 60%, and still more preferably in the range of 30% to 50%.

By setting the metal exposure rate in the above-described range, it is possible to suppress the surface energy of the slide surface 222 of the slide bearing 200 to be relatively low while ensuring a relatively high abrasion resistance of the slide bearing 200.

(5-3)

The method for manufacturing the scroll compressor 100 according to the present embodiment includes a step of processing the composite material CM to be the slide bearing 200 into a cylindrical shape, and a step of cutting the resin-impregnated layer 220 forming the slide surface 222 of the slide bearing 200 and setting the metal exposure rate of the cut surface (the slide surface 222) to the predetermined metal exposure rate ER.

Here, by setting the slide surface 222 of the slide bearing 200 to the predetermined metal exposure rate ER, it is possible to achieve the slide bearing 200 in which the surface energy of the slide surface is suppressed to less than 40 mN/m, and it is possible to quickly discharge the refrigerating machine oil O from the slide portion between the slide bearing 200 and the drive shaft 180 in the scroll compressor 100 and suppress the temperature increase of the components constituting the slide portion between the slide bearing 200 and the drive shaft 180.

In addition, here, by setting the slide surface 222 of the slide bearing 200 to the predetermined metal exposure rate ER by cutting processing, even when the metal exposure rate is increased in order to increase the abrasion resistance of the slide surface 222 of the slide bearing 200, an increase in the surface energy of the slide surface 222 can be relatively suppressed. It is presumed that this is because the resins P are scattered on the surface of the metal M of the slide surface 222 of the resin-impregnated layer 220 due to the transfer of the resin P as described above.

In the manufacturing of the scroll compressor 100, a general manufacturing step of a scroll compressor can be applied to a part other than the manufacturing of the slide bearing 200.

(6) Modification

Modifications of the above-described embodiment will be described below. Note that the following modifications may be combined as appropriate as long as they do not contradict each other.

(6-1) Modification A

According to the above embodiment, the case where the slide bearings 200 and 300 include the composite material CM including the resin-impregnated layer in which the porous metal is impregnated with the resin including PTFE, the slide surface of the slide bearings 200 and 300 is formed of the resin-impregnated layer, and the metal is exposed at the predetermined metal exposure rate ER on the slide surface has been described as an example.

However, the present disclosure is not limited thereto, and similarly to the slide bearings 200 and 300, the slide bearing 148 provided on the boss portion 146 of the movable scroll 140 may include the composite material CM including the resin-impregnated layer in which the porous metal is impregnated with the resin including PTFE, the slide surface of the slide bearing 148 may be formed of the resin-impregnated layer, and the metal may be exposed at the predetermined metal exposure rate ER on the slide surface.

(6-2) Modification B

As described above, the refrigerant compressor in the scope of claims is not limited to a scroll compressor as long as it is a refrigerant compressor including the slide bearing as described in the above embodiment. Specifically, for example, the refrigerant compressor in the scope of claims may be a rotary compressor.

<Appendix>

Although the embodiments and the modifications of the present disclosure have been described above, it will be understood that various changes in form and detail may be made without departing from the spirit and scope of the present disclosure as set forth in the scope of claims.

Reference Signs List

| 10 | air conditioner (refrigeration cycle apparatus) |
| 100 | scroll compressor (refrigerant compressor) |
| 110 | casing |
| 120 | compression mechanism |
| 180 | drive shaft |

200    slide bearing (slide bearing)
300    slide bearing (slide bearing)
O      refrigerating machine oil

Citation List

Patent Literature

PTL 1: International Publication No. 2017/72867

**Claims**

1. A refrigerant compressor comprising:

    a compression mechanism (120) configured to compress an R290 refrigerant;
    a drive shaft (180) configured to transmit power to the compression mechanism;
    a cylindrical slide bearing (200) configured to axially support the drive shaft;
    a casing (110) housing the compression mechanism, the drive shaft, and the slide bearing; and
    a refrigerating machine oil (O) stored in the casing,
    the refrigerating machine oil being PAG, POE, or PVE having an OH group at a terminal of a chemical structure,
    the slide bearing including a composite material including a resin-impregnated layer in which a porous metal is impregnated with a resin including PTFE,
    a slide surface (222) of the slide bearing being formed of the resin-impregnated layer, and the metal being exposed at a predetermined metal exposure rate, and
    a surface energy on a surface of the resin-impregnated layer of the composite material at the predetermined metal exposure rate being less than 40 mN/m.

2. The refrigerant compressor according to claim 1, wherein the predetermined metal exposure rate is in a range of 5% to 80%.

3. The refrigerant compressor according to claim 2, wherein the predetermined metal exposure rate is in a range of 30% to 60%.

4. The refrigerant compressor according to any one of claims 1 to 3, wherein the surface energy is less than 35 mN/m.

5. The refrigerant compressor according to claim 4, wherein the surface energy is less than 30 mN/m.

6. A refrigeration cycle apparatus (10) comprising the refrigerant compressor according to any one of claims 1 to 5.

7. A method for manufacturing the refrigerant compressor according to any one of claims 1 to 5, the method comprising:

    a step of processing the composite material to be the slide bearing into a cylindrical shape; and
    a step of cutting the resin-impregnated layer forming the slide surface of the slide bearing and setting a metal exposure rate of a cut surface to the predetermined metal exposure rate.

FIG. 1

FIG. 2

CM

P

220

M

210

## FIG. 3A

CM

220

P

M

210

222

200

## FIG. 3B

FIG. 4

EP 4 782 690 A1

STEP OF MANUFACTURING SCROLL
COMPRESSOR (PART RELATED TO
FORMATION OF SLIDE BEARING)

A1    FORMING STEP

A2    CUTTING STEP

# FIG. 5

220

R1                                                    R3

R2

PIXEL INDICATING METAL

PIXEL INDICATING RESIN

# FIG. 6

FIG. 7

**TRANSLATION**

## INTERNATIONAL SEARCH REPORT

| International application No. |
|---|
| **PCT/JP2025/034352** |

### A. CLASSIFICATION OF SUBJECT MATTER

*F04B 39/02*(2006.01)i; *F04C 29/02*(2006.01)i; *F16C 17/02*(2006.01)i; *F16C 33/10*(2006.01)i; *F25B 1/00*(2006.01)i
FI:   F04B39/02 P; F04C29/02 Z; F04C29/02 A; F16C17/02 Z; F16C33/10 A; F16C33/10 D; F25B1/00 396G

According to International Patent Classification (IPC) or to both national classification and IPC

### B. FIELDS SEARCHED

Minimum documentation searched (classification system followed by classification symbols)

F04B39/02; F04C29/02; F16C17/02; F16C33/10; F25B1/00

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2024-092438 A (HITACHI-JOHNSON CONTROLS AIR CONDITIONING, INC.) 08 July 2024 (2024-07-08) paragraphs [0012]-[0041], fig. 1-5 | 1-7 |
| A | JP 2007-205254 A (OILES CORPORATION) 16 August 2007 (2007-08-16) paragraphs [0018]-[0061], fig. 1-7 | 1-7 |
| A | JP 59-194128 A (HITACHI, LTD.) 02 November 1984 (1984-11-02) p. 2, column 6, line 10 to p. 3, column 8, line 7, fig. 1-3 | 1-7 |
| A | JP 2023-005362 A (DAIDO METAL CO., LTD.) 18 January 2023 (2023-01-18) paragraphs [0022]-[0043], fig. 1-3 | 1-7 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 December 2025** | **23 December 2025** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

| International application No. |
|---|
| **PCT/JP2025/034352** |

| Patent document cited in search report | | | Publication date (day/month/year) | Patent family member(s) | | | Publication date (day/month/year) |
|---|---|---|---|---|---|---|---|
| JP | 2024-092438 | A | 08 July 2024 | CN | 118257727 | A | |
| JP | 2007-205254 | A | 16 August 2007 | (Family: none) | | | |
| JP | 59-194128 | A | 02 November 1984 | DE | 3414095 | A1 | |
| JP | 2023-005362 | A | 18 January 2023 | US | 2022/0412404 | A1 | |
| | | | | paragraphs [0023]-[0063], fig. 1-3 | | | |
| | | | | CN | 115539512 | A | |
| | | | | KR | 10-2023-0002088 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201772867 A